# EUROPEAN PATENT SPECIFICATION

(11) **EP 3 709 422 B1**
(45) Date of publication and mention of the grant of the patent: **22.11.2023**
(21) Application number: 18876741.2
(22) Date of filing: 06.11.2018
(51) Int. Cl.: H01M 10/04, H01M 50/147, H01M 50/172, H01M 50/30, H01M 50/463, H01M 50/531, H01M 50/543, H01M 50/572, H01M 50/60

(54) **BATTERY AND BATTERY PACK**
BATTERIE UND BATTERIEPACK
BATTERIE ET BLOC-BATTERIE

(30) Priority: 07.11.2017 JP 2017214992
(43) Date of publication of application: 16.09.2020
(73) Proprietor: Kabushiki Kaisha Toshiba, Minato-ku Tokyo 105-0023 (JP)
(72) Inventor: SHINODA, Tatsuya, Kawasaki-shi Kanagawa 212-0013 (JP); MURO, Naoto, Kawasaki-shi Kanagawa 212-0013 (JP)
(74) Representative: Hoffmann Eitle
(86) International application number: PCT/JP2018/041198
(87) International publication number: WO 2019/093333

(56) References cited:
- EP-A1- 3 229 305
- WO-A1-2016/088506
- WO-A1-2016/185867
- WO-A1-2018/043890
- JP-A- 2012 084 525
- JP-A- 2014 032 967
- JP-A- 2014 072 018
- JP-A- 2014 107 147
- JP-A- 2014 107 147

## Description

### FIELD

Embodiments described herein relate to a battery and a battery pack.

### BACKGROUND

Batteries are expected to be electric power sources for electric automobiles, hybrid automobiles, electro motorcycles, forklifts, etc. Each of many batteries includes a container with an opening on its top and a lid that covers the opening. Some batteries are produced through a process including injection of an electrolyte solution through a liquid inlet formed on the lid and welding of a sealing plate to the liquid inlet. These batteries may have welding defects caused by an electrolyte solution remaining in the vicinity of a portion to be sealed. An example can be seen in document Jpn. Pat. Appln. KOKAI Publication No. 2001-202933.
Further examples of the prior art can be seen in documents EP 3 229 305 A1 and JP 2014 107147 A.

### SUMMARY

### TECHNICAL PROBLEM

A problem to be solved by the present invention is to provide a battery for reducing welding defects due to an electrolyte solution. The present invention further aims to provide a battery pack including the aforementioned battery.

### SOLUTION TO PROBLEM

According to one embodiment, a battery includes the technical features of claim 1.

According to one embodiment, a battery pack including the above battery is provided.

According to an example which is not part of the invention, a battery includes an electrode group obtained by stacking a positive electrode, a negative electrode, and a separator; a lid including a positive electrode terminal and a negative electrode terminal both electrically connected to the electrode group; an electrode group holder provided between the electrode group and the lid in such a manner as to be stacked together and be adjacent to the lid; and a container configured to house the electrode group and the electrode group holder. The lid is provided with a liquid inlet penetrating through the lid, and a gas discharge valve having a groove and formed thinly. The electrode group holder includes an opening extending across a position corresponding to the liquid inlet and a position corresponding to the gas discharge valve.

### BRIEF DESCRIPTION OF THE DRAWINGS

FIG. 1 is an exploded perspective view showing an example of a battery according to an embodiment.
FIG. 2 is a cross-sectional view of the battery according to the embodiment.
FIG. 3 is a top view of an electrode group holder according to the embodiment.
FIG. 4 is a perspective view showing details of the battery according to the embodiment disassembled into components.
FIG. 5 is a perspective view showing the battery according to the embodiment disassembled into components with a container omitted.
FIG. 6 is a schematic view showing a configuration example of an electrode group according to the embodiment.
FIG. 7 is a perspective view of a cap body according to the embodiment, in which a lid and the electrode group holder are assembled.
FIG. 8 is a perspective view of a configuration of the electrode group holder according to the embodiment.
FIG. 9 is a perspective view of a configuration of an electrode group holder according to a modification of the embodiment.

### DETAILED DESCRIPTION

Hereinafter, an example of a battery according to an embodiment will be described with reference to the drawings.

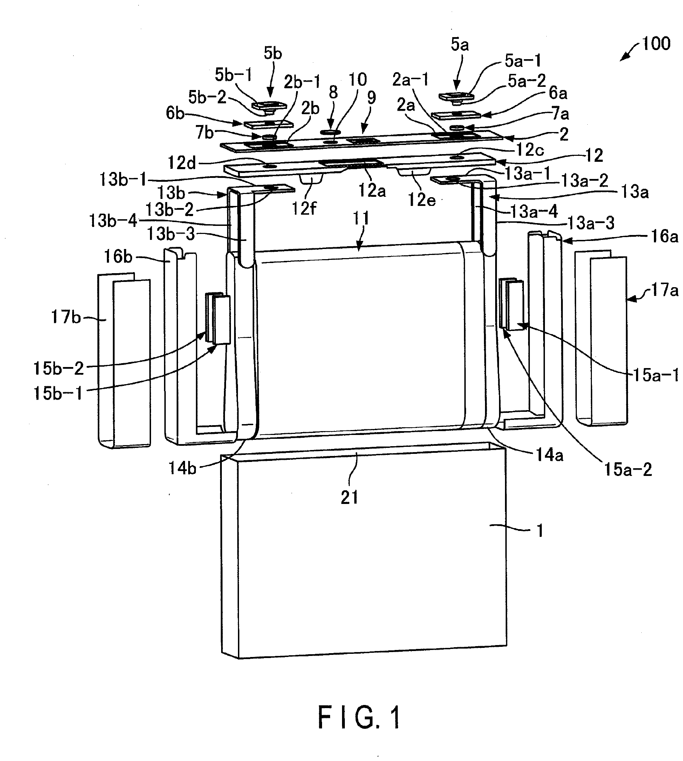

FIG. 1 shows an example of the battery according to the embodiment. A battery 100 includes: a container 1; a lid 2; an electrode group 11; four lead auxiliary members 15a-1, 15a-2, 15b-1, and 15b-2; two leads 13a and 13b each of which is connected to a corresponding one of a positive electrode terminal 5a and a negative electrode terminal 5b; an electrode group holder 12; a positive electrode guard 16a; a negative electrode guard 16b; and insulating tapes 17a and 17b.

The container 1 is made from metal, and has a bottomed rectangular cylindrical shape with an opening 21. The rectangular-shaped lid 2 is arranged in the opening 21 of the container 1 so that the opening 21 is covered with the lid 2. The container 1 houses the electrode group 11 and an electrolyte solution (not shown).

The lid 2 is provided with a gas discharge valve 9. The gas discharge valve 9 is formed of a rectangular-shaped thin portion and has a cross-shaped groove. The lid 2 is especially thin at a portion provided with the groove of the gas discharge valve 9. This causes the groove to fracture when the internal pressure of the container 1 increases, so that the gas inside the container 1 can be discharged to the outside. In addition to the gas discharge valve 9, the lid 2 is provided with two concave portions (fitting portions) 2a and 2b, and a corresponding one of terminal insulators 6a and 6b is fit each of the concave portions 2a and 2b. A bottom of each of the concave portions (fitting portions) 2a and 2b is provided with a corresponding one of through-holes 2a-1 and 2b-1. The lid 2 is further provided with a liquid inlet 10.

The positive electrode terminal 5a, the negative electrode terminal 5b, the two terminal insulators 6a and 6b, and insulating gaskets 7a and 7b to be described later are secured to the lid 2. The positive electrode terminal 5a has a rivet shape including a flange portion 5a-1 and a shaft portion 5a-2 each having conducting properties. The negative electrode terminal 5b has a rivet shape including a flange portion 5b-1 and a shaft portion 5b-2, which each have a conductive characteristic.

Each of the terminal insulators 6a and 6b is shaped in such a manner as to engage with a corresponding one of the positive electrode terminal 5a and the negative electrode terminal 5b. Each of the terminal insulators 6a and 6b covers the outer peripheries of a corresponding one of the flange portions 5a-1 and 5b-1 by engaging with the corresponding one of the positive electrode terminal 5a and the negative electrode terminal 5b.

Each of the terminal insulators 6a and 6b is fitted into a corresponding one of the two concave portions 2a and 2b of the lid 2. Each of the shaft portion 5a-2 of the positive electrode terminal 5a and the shaft portion 5b-2 of the negative electrode terminal 5b is inserted through a corresponding one of the ring-shaped insulating gaskets 7a and 7b, and inserted into a corresponding one of the through-hole 2a-1 provided on the bottom of the concave portion 2a and the through-hole 2b-1 provided on the bottom of the concave portion 2b. Each of the insulating gaskets 7a and 7b is fitted into the corresponding one of the through-holes 2a-1 and 2b-1, so that each of the shaft portion 5a-2 of the positive electrode terminal 5a and the shaft portion 5b-2 of the negative electrode terminal 5b is out of contact with the lid 2 in a corresponding one of the through-holes 2a-1 and 2b-1. With this arrangement, the positive electrode terminal 5a and the negative electrode terminal 5b are electrically insulated from the lid 2.

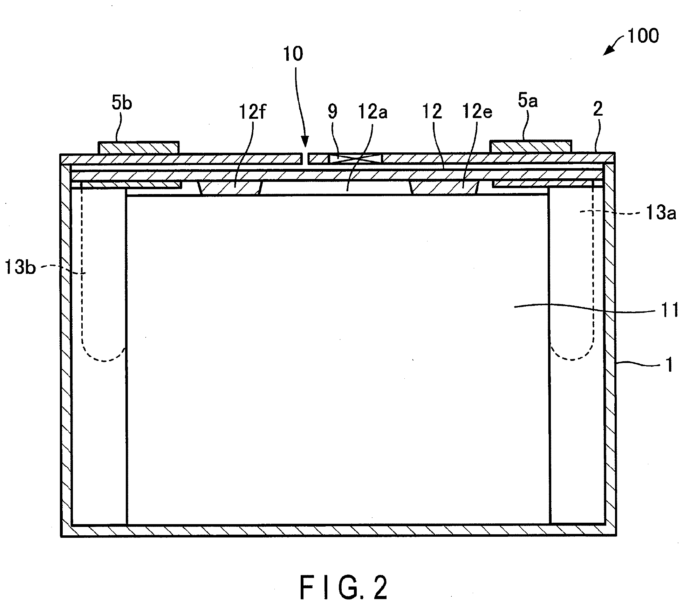

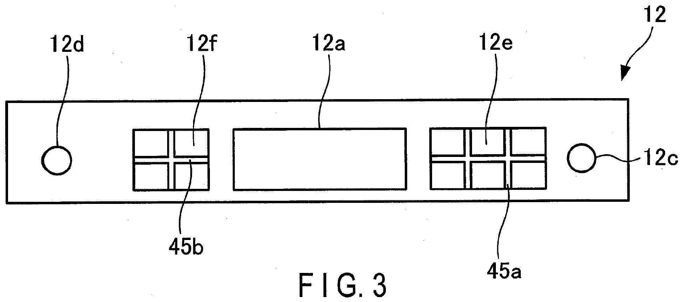

FIG. 2 is a cross-sectional view of the battery 100. FIG. 3 is a top view of the electrode group holder 12. The electrode group holder 12 is mounted in such a manner as to be interposed between the lid 2 and the electrode group 11, and is stacked together with the lid 2 and the electrode 11 in such a manner as to be adjacent thereto. The electrode group holder 12 is shaped as a rectangle, and has both ends each of which is provided with a corresponding one of through-holes 12c and 12d. The shaft portion 5a-2 of the positive electrode terminal 5a, which is inserted through the terminal insulator 6a and the ring-shaped insulating gasket 7a, is inserted into the through-hole 12c. The shaft portion 5b-2 of the negative electrode terminal 5b, which is inserted through the terminal insulator 6b and the ring-shaped insulating gasket 7b, is inserted into the through-hole 12d.

As shown in FIGS. 2 and 3, the electrode group holder 12 is provided with, for example, a rectangular-shaped opening (open hole) 12a extending across a position facing the gas discharge valve 9 provided in the center of the lid 2, and a position facing the liquid inlet 10. The electrode group holder 12 is further provided with convex portions (protrusions) 12e and 12f in positions adjacent to an opening 12a. The convex portions 12e and 12f are formed in such a manner as to have a predetermined area of contact with the electrode group 11 when the battery 100 is assembled. As shown in FIG. 2, which is a cross-sectional view of the battery 100, the electrode group 11 is secured inside the battery 100 by the convex portions 12e and 12f of the electrode group holder 12 coming into contact with the electrode group 11. This prevents the electrode group 11 from moving inside the battery 100 even when vibration or impact is applied to the battery 100, thereby reducing the risk that the electrode group 11 will be damaged by contact with any component inside the battery 100. In some embodiments, the convex portions 12e and 12f may be spaced at a minute interval from the electrode group 11.

The electrode group 11 includes positive electrodes (not shown), negative electrodes (not shown), and separators (not shown). Each positive electrode and each negative electrode are overlapped with each separator being interposed therebetween. The electrode group 11 is impregnated with an electrolyte solution (not shown).

The positive electrode includes a belt-like positive electrode current collector, and a positive electrode active material-containing layer formed on a part of the surface of the current collector. The positive electrode current collector includes a positive electrode current collecting tab 14a with no positive electrode active material-containing layer formed on its surface. The positive electrode is manufactured by coating a current collector consisting of an aluminum foil or an aluminum alloy foil with slurry including a positive electrode active material. The negative electrode includes a belt-like negative electrode current collector, and a negative electrode active material-containing layer formed on a part of the surface of the current collector. The negative electrode current collector includes a negative electrode current collecting tab 14b with no negative electrode active material-containing layer formed on its surface. The negative electrode is manufactured by coating a current collector consisting of an aluminum foil or an aluminum alloy foil with slurry including a negative electrode active material.

The electrode group 11 is formed by winding a laminate into a flat shape, in which the laminate is formed by laminating the positive electrodes, the negative electrodes, and the separators in such a manner as to interpose each separator between each positive electrode and each negative electrode. The electrode group 11 has two end faces each of which faces toward a corresponding one of the short-side faces of the container 1. One of these end faces functions as the positive electrode current collecting tabs 14a, and the other end face functions as the negative electrode current collecting tabs 14b. In the electrode group 11, layers of the positive electrode current collecting tab 14a protrude from the end face facing one of the short-side faces of the container 1. In the electrode group 11, layers of the negative electrode current collecting tab 14b protrude from the end face facing the other short-side face of the container 1. The positive electrode current collecting tab 14a is connected to the positive electrode lead auxiliary members 15a-1 and 15a-2. The negative electrode current collecting tab 14b is connected to the negative electrode lead auxiliary members 15b-1 and 15b-2. Each of the lead auxiliary members 15a-1 and 15a-2 clips together layers of the positive electrode current collecting tab 14a, in which the number of clipped together layers falls within a predetermined scope, and each of the lead auxiliary members 15b-1 and 15b-2 clips together layers of the negative electrode current collecting tab 14b, in which the number of clipped together layers falls within a predetermined scope. In this manner, the layers of the positive electrode current collecting tab 14a and the negative electrode current collecting tab 14b are collected into bundles. The lead auxiliary members 15a-1, 15a-2, 15b-1, and 15b-2 are conductive members made from a pure aluminum-based aluminum alloy. Layers of the positive electrode current collecting tab 14a are collected into bundles by the positive electrode lead auxiliary members 15a-1 and 15a-2, so that the layers are easily welded to each other. Layers of the negative electrode current collecting tab 14b are collected into bundles by the negative electrode lead auxiliary members 15b-1 and 15b-2, so that the layers are easily welded to each other. As shown in FIG. 1, for example, layers of the positive electrode current collecting tab 14a are collected into two bundles by the positive electrode lead auxiliary members 15a-1 and 15a-2. Layers of the negative electrode current collecting tab 14b are collected into two bundles by the negative electrode lead auxiliary members 15b-1 and 15b-2. Layers of each of the positive electrode current collecting tab 14a and the negative electrode current collecting tab 14b may be collected into any number of bundles. Each lead auxiliary member is bonded by, for example, ultrasonic bonding, to a current collecting tab whose layers are collected into a bundle by this particular lead auxiliary member.

Each of the positive electrode current collecting tab 14a and the negative electrode current collecting tab 14b is formed in such a manner as to protrude from a corresponding one of the ends in the direction of the winding axis of the laminate when it is wound.

Each of the positive electrode lead 13a and the negative electrode lead 13b is made of a conductive plate. The positive electrode lead 13a is electrically connected to the positive electrode current collecting tab 14a. The negative electrode lead 13b is electrically connected to the negative electrode current collecting tab 14b.

The positive electrode lead 13a includes weld portions 13a-3 and 13a-4 which form a two-pronged shape, and a base portion 13a-1 which supports the weld portions 13a-3 and 13a-4. The shaft portion 5a-2 of the positive electrode terminal 5a attached to the lid 2 is fitted into the hole 13a-2 included in the base portion 13a-1 of the positive electrode lead 13a, thereby being fixed to the base portion 13a-1. The positive electrode lead auxiliary members 15a-1 and 15a-2, which each bundle layers of the positive electrode current collecting tab 14a of the electrode group 11, are interposed and fixed by welding between the weld portions 13a-3 and 13a-4 of the positive electrode lead 13a, which form a two-pronged shape.

The negative electrode lead 13b includes weld portions 13b-3 and 13b-4 which form a two-pronged shape, and a base portion 13b-1 which supports the weld portions 13b-3 and 13b-4. The shaft portion 5b-2 of the negative electrode terminal 5b attached to the lid 2 is fitted into the hole 13b-2 included in the base portion 13b-1 of the negative electrode lead 13b, thereby being fixed to the base portion 13b-1. The negative electrode lead auxiliary members 15b-1 and 15b-2, which each bundle layers of the negative electrode current collecting tab 14b of the electrode group 11, are interposed and fixed by welding between the weld portions 13b-3 and 13b-4 of the negative electrode lead 13b, which form a two-pronged shape.

The electrode guards 16a and 16b are insulating components made from an insulating material that is higher in electric resistance than the container 1, the positive electrode terminal 5a, the negative electrode terminal 5b, the lid 2, the positive electrode lead 13a, the negative electrode lead 13b, etc. The battery 100 includes the positive electrode guard 16a provided on the positive-electrode side, and the negative electrode guard 16b provided on the negative-electrode side. The positive electrode guard 16a provided on the positive-electrode side is formed in such a shape as to cover the positive electrode lead 13a, the positive electrode current collecting tab 14a, etc. The positive electrode guard 16a provided on the positive-electrode side can prevent the positive electrode lead 13a, the positive electrode current collecting tab 14a, etc. from coming into contact with the container 1. Similarly, the negative electrode guard 16b provided on the negative-electrode side can prevent the negative electrode lead 13b, the negative electrode current collecting tab 14b, etc. from coming into contact with the container 1.

The insulating tape 17a is applied to the boundary between the positive electrode guard 16a and the surface of the electrode group 11. The insulating tape 17b is applied to the boundary between the negative electrode guard 16b and the surface of the electrode group 11. This enables the positive electrode guard 16a and the negative electrode guard 16b to be strongly secured by the electrode group 11.

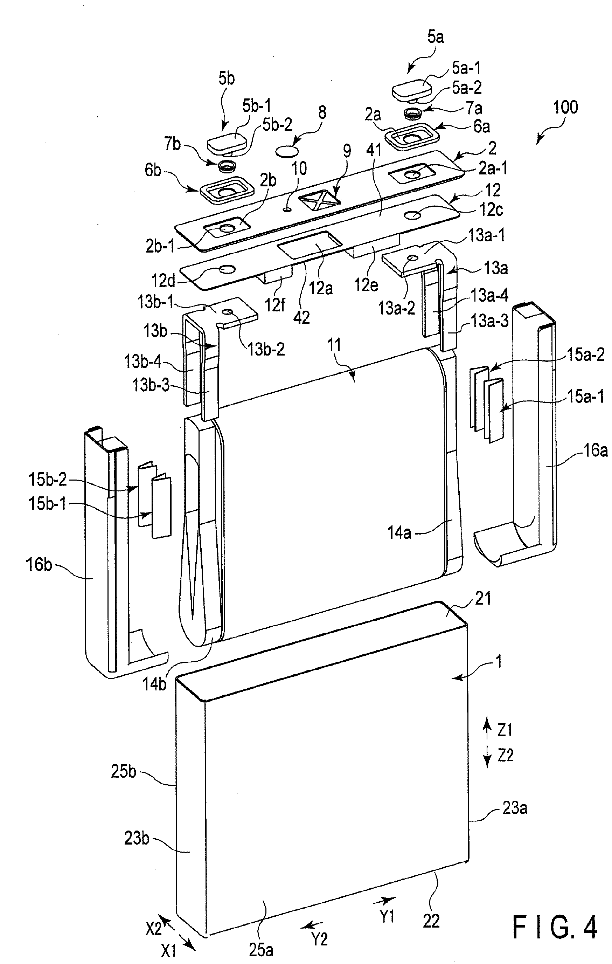

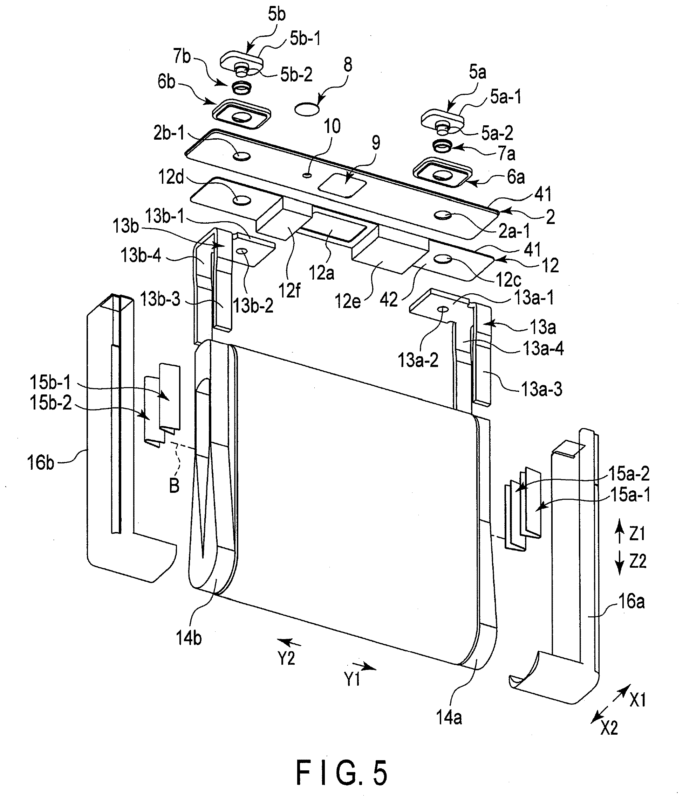

FIG. 4 shows the battery 100 according to the above-described embodiment disassembled into components, and FIG. 5 shows the battery 100 disassembled into components with the container 1 omitted. As shown in FIGS. 4 and 5, the battery 100 is defined in terms of a depth direction (direction indicated by arrows X1 and X2), a lateral direction (direction indicated by arrows Y1 and Y2) intersecting (perpendicular to or substantially perpendicular to) the depth direction, and a height direction (direction indicated by arrows Z1 and Z2) intersecting (perpendicular to or substantially perpendicular to) both the depth direction and the lateral direction. The depth direction of the battery 100 corresponds to or substantially corresponds to that of the container 1. The lateral direction of the battery 100 corresponds to or substantially corresponds to that of the container 1. The height direction of the battery 100 corresponds to that of the container 1.

The container 1 has a much smaller dimension in the depth direction than each of the dimensions in the lateral direction and the dimension in the height direction. The battery 100 has a dimension in the depth direction equal to or approximately equal to that of the container 1, and has a dimension in the lateral direction equal to or approximately equal to that of the container 1. The battery 100 has a dimension in the height direction equal to or approximately equal to that of the container 1. Therefore, the container 100 has a much smaller dimension in the depth direction than each of the dimensions in the lateral direction and the dimension in the height direction.

The container 1 includes a bottom wall 22 and side walls 23a, 23b, 25a, and 25b, in addition to the aforementioned opening 21. The bottom wall 22 and the side walls 23a, 23b, 25a, and 25b of the container 1 form an inner cavity in which the electrode group 11 and the electrode group holder 12 are housed. In the opening 21, the inner cavity is open on one side (upper side) in the height direction of the container 1. In the container 1, the bottom wall 22 is separated in the height direction from the opening 21 with the inner cavity being interposed therebetween, and forms an end face on the opposite side (lower side) of the opening 21 in the height direction. With respect to the container 1, the dimension from the opening 21 to the outer surface of the bottom wall 22 is equal to or approximately equal to the dimension in the height direction.

The side walls 23a, 23b, 25a, and 25b extend from the bottom wall 22 to the opening 21 in the height direction. The side walls 23a and 23b are separated from each other in the lateral direction with the inner cavity being interposed therebetween. The side walls 25a and 25b are separated from each other in the depth direction with the inner cavity being interposed therebetween. Each of the side walls 23a and 23b extends from the side wall 25a to the side wall 25b in the depth direction. Each of the side walls 25a and 25b extends from the side wall 23a to the side wall 23b in the lateral direction. With respect to the container 1, the dimension from the outer surface of the side wall 23a to the outer surface of the side wall 23b is equal to or approximately equal to the dimension in the lateral direction. With respect to the container, the dimension from the outer surface of the side wall 25a to the outer surface of the side wall 25b is equal to or approximately equal to the dimension in the depth direction.

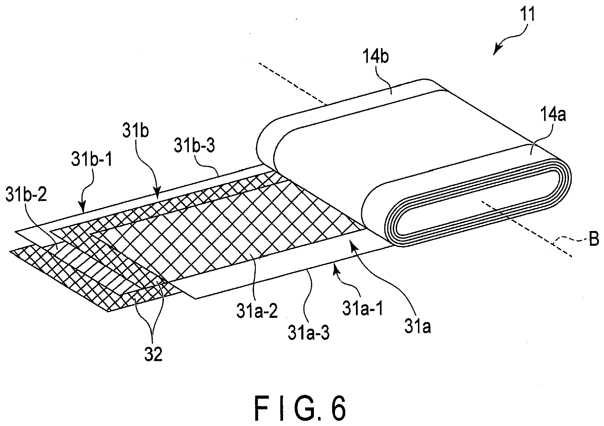

FIG. 6 shows a configuration example of the electrode group 11. In the example shown in FIG. 6, the electrode group 11 is formed in, for example, a flat shape, and includes the positive electrode 31a, the negative electrode 31b, and the separator 32. The positive electrode 31a includes a positive electrode current collecting foil 31a-1 as a positive electrode current collector, and a positive electrode active material-containing layer 31a-2 carried on a surface of the positive electrode current collecting foil 31a-1. The negative electrode 31b includes a negative electrode current collecting foil 31b-1 as a negative electrode collector, and a negative electrode active material-containing layer 31b-2 carried on a surface of the negative electrode current collecting foil 31b-1.

In the positive electrode current collecting foil 31a-1, a long-side edge 31a-3 as one of long-side edges, and its neighboring region, form the aforementioned positive electrode current collecting tab 14a. In the positive electrode current collecting tab 14a, the positive electrode active material-containing layer 31a-2 is not carried on the surface of the positive electrode current collecting foil 31a-1. In the negative electrode current collecting foil 31b-1, a long-side edge 31b-3 as one of long-side edges, and its neighboring region, form the aforementioned negative electrode current collecting tab 14b. In the negative electrode current collecting tab 14b, the negative electrode active material-containing layer 31b-2 is not carried on the surface of the negative electrode current collecting foil 31b-1.

In the electrode group 11 in the example shown in FIG. 6, the positive electrode 31a, the negative electrode 31b, and the separator 32 are wound around winding axis B into a flat shape in a condition in which the separator 32 is interposed between the positive electrode active material-containing layer 31a-2 and the negative electrode active material-containing layer 31b-2. At this time, for example, the positive electrode 31a, the separator 32, the negative electrode 31b, and the separator 32 are wound in a condition in which they are stacked together in this order. In the electrode group 11 in the example shown in FIG. 6, the positive electrode current collecting tab 14a of the positive electrode current collecting foil 31a-1 protrudes from the negative electrode 31b and the separator 32 toward one side in the direction along the winding axis B. The negative electrode current collecting tab 14b of the negative electrode current collecting foil 31b-1 protrudes from the positive electrode 31a and the separator 32 toward a side opposite to the side toward which the positive electrode current collecting tab 14a protrudes in the direction along the winding axis B. The battery group 11 in the example shown in FIG. 6 is defined in terms of a width direction intersecting (perpendicular to or substantially perpendicular to) the winding axis B and a thickness direction intersecting (perpendicular to or substantially perpendicular to) both the winding axis B and the width direction. The electrode group 11 in the example shown in FIG. 6 has a much larger dimension in the width direction than the dimension in the thickness direction.

As shown in FIG. 4, etc., the electrode group 11 is arranged in the inner cavity of the container 1 in a condition in which the winding axis B extends in the lateral direction of the container 1 (battery 100). The electrode group 11 is arranged in a condition in which the thickness direction of the electrode group 11 corresponds to or substantially corresponds to the depth direction of the container 1, and the width direction of the electrode group 11 corresponds to or substantially corresponds to the height direction of the container 1. In the electrode group 11 arranged in the inner cavity of the container 1, the positive electrode current collecting tab 14a protrudes from the negative electrode 31b toward one side in the lateral direction of the container 1 (battery 100). In the electrode group 11, the negative electrode current collecting tab 14b protrudes from the positive electrode 31a toward a side opposite to the side toward which the positive electrode current collecting tab 14a protrudes in the lateral direction of the container 1 (battery 100).

The electrode group 11 is arranged as described above. This arrangement creates spaces inside the inner cavity of the container 1, on both sides of the electrode group 11 in the lateral direction of the container 1. That is, inside the inner cavity of the container 1, spaces are respectively created on one end and the other end in the lateral direction of the container 1. In one of these spaces, the positive electrode current collecting tab 14a, the positive electrode lead auxiliary members 15a-1 and 15a-2, the positive electrode lead 13a, and the positive electrode guard 16a are arranged. In one of these spaces, the positive electrode current collecting tab 14a is connected to the positive electrode lead 13a with the positive electrode lead auxiliary members 15a-1 and 15a-2 being interposed therebetween. In the other space, the negative electrode current collecting tab 14b, the negative electrode lead auxiliary members 15b-1 and 15b-2, the negative electrode lead 13b, and the negative electrode guard 16b are arranged. In the other space, the negative electrode current collecting tab 14b is connected to the negative electrode lead 13b with the negative electrode lead auxiliary members 15b-1 and 15b-2 being interposed therebetween.

As shown in FIGS. 4 and 5, etc., the lid 2 is formed in a substantially rectangular plate shape and has a smaller dimension in the depth direction than the dimension in the lateral direction. With respect to the lid 2, therefore, the lateral direction serves as the long-side direction, while the depth direction serves as the short-side direction. The lid 2 has a smaller dimension in the thickness direction than each of the dimension in the depth direction and the dimension in the lateral direction. The lid 2 has a dimension in the depth direction equal to or approximately equal to that of the container 1, and a dimension in the lateral direction equal to or approximately equal to that of the container 1. With respect to the lid 2, the gas discharge valve 9 is formed to be thinner than the remaining regions.

In the battery 100, the lid 2 is arranged in a condition in which the depth direction (short-side direction) of the lid 2 corresponds to or substantially corresponds to the depth direction of the container 1 (battery 100), and the lateral direction (long-side direction) of the lid 2 corresponds to or substantially corresponds to the lateral direction of the container 1 (battery 100). The lid 2 is arranged in a condition in which the thickness direction of the lid 2 corresponds to or substantially corresponds to the height direction of the container 1 (battery 100). The lid 2 covers the opening 21 of the container 1. The container 2 is welded to the end face of the opening 21 in the container 1.

In the battery 100, the positive electrode terminal 5a and the negative electrode terminal 5b, which have opposite electrical polarities, are attached as a pair of electrode terminals to the outer surface of the lid 2. The positive electrode terminal 5a is electrically connected to the positive electrode current collecting tab 14a of the electrode group 11 with the positive electrode lead 13a, etc., being interposed therebetween. The negative electrode terminal 5b is electrically connected to the negative electrode current collecting tab 14b of the electrode group 11 with the positive electrode lead 13b, etc., being interposed therebetween.

The electrode terminals 5a and 5b are separated from each other in the lateral direction of the battery 100. The lid 2 has the positive electrode terminal 5a arranged at one of the ends in the lateral direction, and the negative terminal 5b arranged at the other end, which is opposite in the lateral direction to the side in which the positive electrode terminal 5a is positioned. The gas discharge valve 9 and the liquid inlet 10 that are formed in the lid 2 are arranged between the electrode terminals 5a and 5b in the lateral direction of the battery 100. In the lid 2, the liquid inlet 10 is formed in the vicinity of the gas discharge valve 9. In the lid 2 according to the present embodiment, the gas discharge valve 9 and the liquid inlet 10 are arranged in the center part in the lateral direction. However, the gas discharge valve 9 and the liquid inlet 10 are separated from each other in the lateral direction of the battery 100.

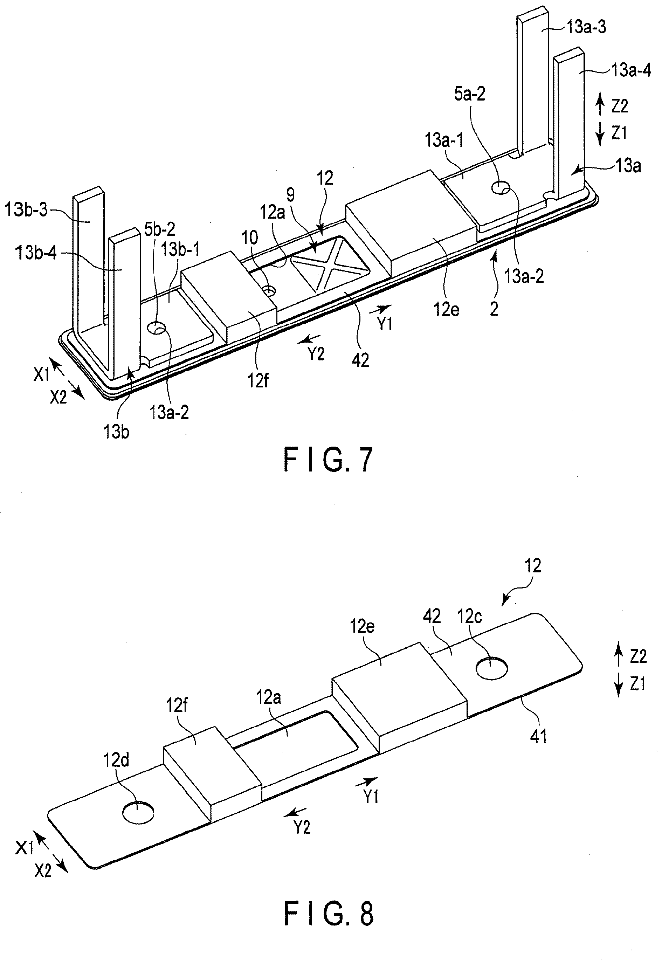

FIG. 7 shows a cap body in which the lid 2, the electrode group holder 12, etc. are assembled. FIG. 8 shows a configuration of the electrode group holder 12. As shown in FIGS. 4, 5, 7, 8, etc., the electrode group holder 12 is formed in a substantially rectangular plate shape and has a smaller dimension in the depth direction than the dimension in the lateral direction. With respect to the electrode group holder 12, therefore, the lateral direction serves as the long-side direction, while the depth direction serves as the short-side direction. The electrode group holder 12 has a smaller dimension in the thickness direction than each of the dimension in the depth direction and the dimension in the lateral direction. The electrode group holder 12 has a dimension in the depth direction equal to or approximately equal to that of the inner cavity of the container 1, and a dimension in the lateral direction equal to or approximately equal to that of the inner cavity of the container 1. The electrode group holder 12 is made of a resin having an electrical insulation property.

In the battery 100, the electrode group holder 12 is arranged in a condition in which the depth direction (short-side direction) of the electrode group holder 12 corresponds to or substantially corresponds to the depth direction of the container 1 (battery 100), and the lateral direction (long-side direction) of the electrode group holder 12 corresponds to or substantially corresponds to the lateral direction of the container 1 (battery 100). The electrode group holder 12 is arranged in a condition in which the thickness direction of the electrode group holder 12 corresponds to or substantially corresponds to the height direction of the container 1 (battery 100). The electrode group holder 12 is provided between the lid 2 and the electrode group 11 inside the container 1. The electrode group holder 12 is stacked together with the lid 2. In the battery 100, the electrode group 11, the electrode group holder 12, and the lid 2 are stacked (overlapped) together in this order from the side close to the bottom wall 22 of the container 1 in the height direction.

The electrode group holder 12 has a face 41 and a face 42 oriented toward the side opposite to the face 41. In the battery 100, the face 41 is oriented toward the side in which the lid 2 is positioned, in the height direction of the container 1. The face 42 is oriented toward the side in which the electrode group 11 is positioned, in the height direction of the container 1. Each of the opening (open hole) 12a and the through-holes 12c and 12d extends from the face 41 to the face 42, thereby penetrating through the electrode group holder 12. On the face 42 of the electrode group holder 12, each of the convex portions (protrusions) 12e and 12f protrudes toward the side in which the electrode group 11 is positioned.

The through-holes 12c and 12d are separated from each other in the lateral direction of the battery 100. The electrode group holder 12 has the through-hole 12c arranged in one of the ends in the lateral direction, and the through-hole 12d arranged in the other end, which is opposite in the lateral direction to the side in which the though-hole 12c is positioned. The opening 12a and the convex portions (protrusions) 12e and 12f formed in the electrode group holder 12 are arranged between the through-holes 12c and 12d in the lateral direction of the battery 100. The opening 12a and the convex portions 12e and 12f are arranged between the electrode terminals 5a and 5b in the lateral direction of the battery 100.

In the electrode group holder 12 according to the present embodiment, the opening (open hole) 12a is formed across an area facing the gas discharge valve (gas open valve) 9 and an area facing the liquid inlet 10. In this manner, the opening 12a is formed in the electrode group holder 12 in such a manner as to continuously extend from the area facing the gas discharge valve 9 to the area facing the liquid inlet 10 in the lateral direction of the battery 100. In the electrode group holder 12 according to the present embodiment, the opening 12a is arranged in the center part in the lateral direction.

In the electrode group holder 12, furthermore, the opening 12a is arranged between the convex portions 12e and 12f in the lateral direction. Accordingly, the convex portions (protrusions) 12e and 12f are respectively provided on both sides of the opening (open hole) 12a in the lateral direction of the battery 100. In the present embodiment, the convex portion 12e is provided between the opening 12a and the positive electrode terminal 5a in the lateral direction of the battery 100, and the convex portion 12f is provided between the opening 12a and the negative electrode terminal 5b in the lateral direction of the battery 100. Accordingly, in the electrode group holder 12, the convex portions 12e and 12f are provided in the surroundings of the opening (open hole) 12a, that is, in the vicinity of the opening 12a.

In the embodiment described above, the electrode group holder 12 is provided with the two convex portions (protrusions) 12e and 12f; however, the electrode group holder 12 may be provided with one convex portion or three or more convention portions. In any case, the convex portion(s) (12e, 12f, etc.) are arranged between the electrode terminals 5a and 5b in the lateral direction of the battery 100. In addition, the convex portion(s) (12e, 12f, etc.) are formed in the surroundings of the opening 12a.

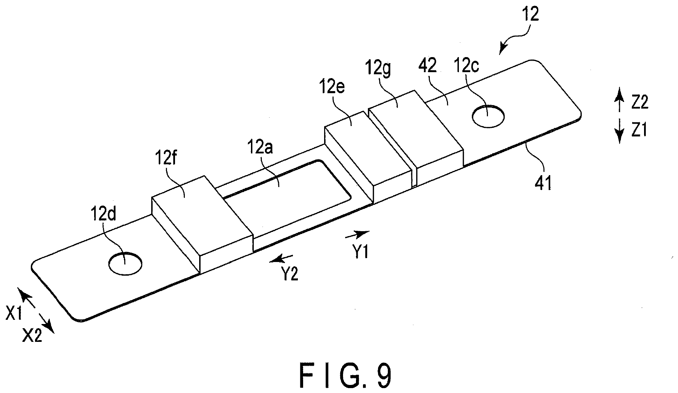

For example, in a modification shown in FIG. 9, the electrode group holder 12 is provided with three convex portions (protrusions) 12e to 12g. The convex portions 12e and 12g are provided between the opening 12a and the positive electrode terminal 5a in the lateral direction of the battery 100, and the convex portion 12f is provided between the opening 12a and the negative electrode terminal 5b in the lateral direction of the battery 100. In this modification also, the convex portions 12e to 12g are provided in the surroundings of the opening (open hole) 12a, that is, in the vicinity of the opening 12a in the electrode group holder 12.

In the electrode group holder 12 according to the embodiment described above, as shown in FIG. 3, etc., it is preferable that a lattice-shaped rib 45a be formed in a position corresponding to the convex portion 12e, and a lattice-shaped rib 45b be formed in a position corresponding to the convex portion 12f. The rib 45a supports the convex portion 12e from the side in which the lid 2 is positioned in the height direction of the battery 100. The rib 45b supports the convex portion 12f from the side in which the lid 2 is positioned in the height direction of the battery 100.

The battery according to the embodiment described above is not limited to a primary battery or any battery. Examples of the battery according to the embodiment include a lithium ion battery.

Furthermore, a battery pack may be formed using one or more batteries according the embodiment described above. Such a battery pack may include the single battery or the plurality of batteries. In the case of the battery pack provided with the plurality of batteries, the batteries may be connected in series or connected in parallel. The battery pack may be provided with both a series-connection structure in which the batteries are connected in series and a parallel-connection structure in which the batteries are connected in parallel. The battery pack may further include a protective circuit that controls charge and discharge of the batteries. The battery pack formed as described above is usable as an electric power source for a vehicle such as an electric automobile, a hybrid automobile, an electro motorcycle, a forklift, etc.

Hereinafter, a detailed description will be given to the positive electrode, the negative electrode, the separator, the electrolyte solution, and the container that are usable in the battery according to the embodiment, as well as the configuration and shape of the electrode group.

### 1) Positive Electrode

The positive electrode may include a positive electrode current collector, and a positive electrode active material-containing layer formed on part of a surface of the current collector. The positive electrode current collector is an aluminum foil, an aluminum alloy foil, etc., and has a thickness of 10 µm to 20 µm. The positive electrode active material-containing layer may include a positive electrode active material, and optionally, an electro-conductive agent and a binder. As the positive electrode active material, for example, an oxide or a sulfide may be used. Examples of the positive electrode active material include but are not limited to an oxide, a sulfide, a polymer, etc., that can occlude and discharge lithium. As the positive electrode active material, it is preferable to use a lithium manganese composite oxide, a lithium nickel composite oxide, a lithium cobalt composite oxide, a lithium iron phosphate, etc., in terms of a high positive electrode electric potential.

### 2) Negative Electrode

The negative electrode may include a negative electrode current collector, and a negative electrode active material-containing layer formed on part of a surface of the current collector. The negative electrode current collector is an aluminum foil, an aluminum alloy foil, a copper foil, etc., and has a thickness of 10 µm to 20 µm.

The negative electrode active material-containing layer may include a negative electrode active material, and optionally, an electro-conductive agent and a binder. As the negative electrode active material, a material that can occlude and discharge lithium, such as a metal oxide, a metal nitride, an alloy, carbon, etc., may be used. Examples of the negative electrode active material include but are not limited to a metal oxide, a metal sulfide, a metal nitride, a carbon material, etc., that can occlude and discharge lithium. As the negative electrode active material, in particular, it is preferable to use a material that occludes and discharges lithium ions at the noble electric potential of 0.4 V or more in comparison to an electric potential of metal lithium, that is, a material capable of occluding and discharging lithium ions at the noble electric potential of 0.4 V (vs. Li⁺/Li) or more. The use of a negative electrode active material which occludes and discharges lithium ions at such a noble electric potential inhibits an alloy reaction between aluminum or an aluminum alloy and lithium. This allows the use of aluminum or an aluminum alloy for a negative electrode current collector and negative electrode-related constituent members. As a negative electrode active material which occludes and discharges lithium ions at the noble electric potential of 0.4 V (vs. Li⁺/Li) or more, for example, a titanium oxide, a lithium titanium composite oxide such as lithium titanate, a tungsten oxide, an amorphous tin oxide, a niobium titanium composite oxide, a tin silicon oxidate, a silicon oxide, etc. are included, and it is particularly preferable to use the lithium titanium composite oxide as the negative electrode active material. When a carbon material which occludes and discharges lithium ions is used as the negative electrode active material, a copper foil is preferably used as the negative current collector. A carbon material used as the negative electrode active material occludes and discharges lithium ions at the noble electric potential of about 0 V (vs. Li⁺/Li).

It is desirable that an aluminum alloy used for the positive electrode current collector and the negative electrode current collector include one or two or more elements selected from Mg, Ti, Zn, Mn, Fe, Cu, and Si. A purity of aluminum and an aluminum alloy may be set to 98% by weight or more, and preferably 99.99% by weight or more. Furthermore, pure aluminum with a purity of 100% is usable as a material for the positive electrode current collector and/or the negative electrode current collector. A content of a transition metal such as nickel, chromium, etc., contained in aluminum and an aluminum alloy is preferably 100 wt.ppm or less (including 0 wt.ppm).

### 3) Separator

A separator may be made of, for example, a porous film including polyethylene, polypropylene, cellulose, or polyvinylidene fluoride (PVdF), or be made of a synthetic resin nonwoven fabric. In particular, a porous film made from polyethylene or polypropylene is melted so that current can be interrupted at a certain temperature. Thus, such a porous film can increase safety.

The separator may be a separate sheet, etc. from the positive electrode and the negative electrode, or may be integrated with one of the positive electrode and the negative electrode. The separator may be made of an organic material, an inorganic material, or a mixture of an organic material and an inorganic material. Examples of an organic material that forms the separator include engineering plastic and super engineering plastic. Examples of engineering plastics include polyamide, polyacetal, polybutylene terephthalate, polyethylene terephthalate, syndiotactic polystyrene, polycarbonate, polyamide imide, polyvinyl alcohol, polyvinylidene fluoride, modified polyphenylene ether, etc. Examples of super engineering plastics include polyphenylene sulfide, polyetheretherketone, liquid crystal polymer, polyvinylidene fluoride, polytetrafluoroethylene (PTFE), polyethernitrile, polysulfone, polyacrylate, polyetherimide, thermoplastic polyimide, etc. Examples of an inorganic material that forms the separator include oxides (for example, aluminum oxide, silicon dioxide, magnesium oxide, phosphorus oxide, calcium oxide, iron oxide, and titanium oxide), and nitrides (for example, boron nitride, aluminum nitride, silicon nitride, and barium nitride), etc.

### 4) Electrolyte Solution

As the electrolytic solution impregnated into the electrode group, for example, a nonaqueous electrolyte is usable. A nonaqueous electrolyte may be, for example, a liquid non-aqueous electrolyte solution prepared by dissolving an electrolyte in an organic solvent, or a gel nonaqueous electrolyte in which a liquid electrolyte solution and a polymer material are combined. It is preferable that the liquid nonaqueous electrolyte solution be obtained by dissolving an electrolyte in an organic solvent at a concentration of 0.5 mol/L or more and 2.5 mol/L or less.

Examples of the electrolyte dissolved in the organic solvent include lithium salts such as lithium perchlorate (LiClO₄), lithium hexafluorophosphate (LiPF₆), lithium tetrafluoroborate (LiBF₄), lithium arsenic hexafluoride (LiAsF₆), trifluoromethane lithium sulfonate (LiCF₃SO₃) and lithium bistrifluoromethylsulfonylimide [LiN (CF₃SO₂)₂], and mixtures thereof. An electrolyte that is difficult to oxidize even at a high electric potential is preferable, and LiPF₆ is most preferable.

Examples of the organic solvent include cyclic carbonates such as propylene carbonate (PC), ethylene carbonate (EC), and vinylene carbonate; liner carbonate such as diethyl carbonate (DEC), dimethyl carbonate (DMC), and methyl ethyl carbonate (MEC); cyclic ethers such as tetrahydrofuran (THF), 2-methyltetrahydrofuran (2MeTHF) and dioxolane (DOX); linear ethers such as dimethoxyethane (DME) and diethoxyethane (DEE); and γ-Butyrolactone (GBL), acetonitrile (AN), and sulfolane (SL). These organic solvents are usable alone or as a mixed solvent.

Examples of the polymer material include polyvinylidene fluoride (PVdF), polyacrylonitrile (PAN), and polyethylene oxide (PEO).

Alternatively, as the nonaqueous electrolyte, a room temperature molten salt (ionic melt) containing lithium ions, a polymer solid electrolyte, an inorganic solid electrolyte, etc. may be used.

Room temperature molten salt (ionic melt) refers to a compound that can exist as a liquid at room temperature (15 to 25 °C) among organic salts composed of organic cations in combination with anions. Examples of the room-temperature molten salt include a room-temperature molten salt that exists alone as a liquid, a room-temperature molten salt that becomes a liquid when mixed with an electrolyte, and a room-temperature molten salt that becomes a liquid when dissolved in an organic solvent. Generally, a melting point of a room-temperature molten salt used for a nonaqueous electrolyte battery is 25 °C or less. Furthermore, an organic cation generally has a quaternary ammonium skeleton.

When a solid electrolyte such as a high-polymer solid electrolyte, an inorganic solid electrolyte, etc., is provided as a nonaqueous electrolyte, the electrode group may not be provided with the aforementioned separator. In the electrode group configured in the above manner, instead of the separator, a solid electrolyte is interposed between the positive electrode and the negative electrode. By this, the solid electrolyte achieves electrical isolation between the positive electrode and the negative electrode.

Alternatively, when a battery reaction of the battery according to the embodiment involves no lithium ions, the electrolyte solution may be an aqueous solution.

### 5) Container

Like the container 1 included in the battery 100 described with reference to FIG. 1, a metal container is usable as the container.

As the metal container, for example, a metal container having a thickness of 1 mm or less is usable. It is more preferable that a metal container have a thickness of 0.5 mm or more.

The metal container is made of, for example, aluminum or an aluminum alloy. The aluminum alloy is preferably an alloy containing an element such as magnesium, zinc, silicon, etc. When the alloy contains a transition metal such as iron, copper, nickel, chromium, etc., a content of such a transition metal is preferably 1% or less. The container is not limited to a metal container.

### 6) Configuration and Shape of Electrode Group

The electrode group can adopt any configuration as long as the positive electrode active material and the negative electrode active material face each other with the separator being interposed therebetween. Instead of the separator, a solid electrolyte as a nonaqueous electrolyte is usable.

For example, the electrode group may have a stack-type configuration. The stack-type configuration has a structure in which the positive electrode and the negative electrode are stacked with the separator being interposed therebetween described above.

Alternatively, the electrode group may have a wound-type configuration. In the wound-type configuration, the above-described positive electrode and negative electrode are laminated with the separator being interposed therebetween, and a laminate thus obtained is wound into a spiral form or into a flat form.

A general shape of the electrode group may be determined in conformity with a container in which the electrode group is housed.

Next, the production process of the battery 100 according to the present embodiment will be described.

In the electrode group 11 in which the positive electrode and the negative electrode are overlapped with the separator interposed being therebetween, layers of the positive electrode current collecting tab 14a protruding from one of the ends in the direction along the winding axis B are clipped together by each of the positive electrode lead auxiliary members 15a-1 and 15a-2, and layers of the negative electrode current collecting tab 14b protruding from the other end in the direction along the winding axis B are clipped together by each of the negative electrode lead auxiliary members 15b-1 and 15b-2. On the other hand, the shaft portion 5a-2 of the positive electrode terminal 5a is inserted to be fitted in the terminal insulator 6a, the gasket 7a, the through-hole 2a-1 of the lid 2, the through-hole 12c of the electrode group holder 12, and the hole 13a-2 included in the base portion 13a-1 of the positive electrode lead 13a. In this manner, the base portion 13a-1 of the positive electrode lead 13a is fixed to the lid 2. Similarly, the shaft portion 5b-2 of the negative electrode terminal 5b is inserted to be fitted in the terminal insulator 6b, the gasket 7b, the through-hole 2b-1 of the lid 2, the through-hole 12d of the electrode group holder 12, and the hole 13b-2 included in the base portion 13b-1 of the negative electrode lead 13b. In this manner, the base portion 13b-1 of the negative electrode lead 13b is fixed to the lid 2. Accordingly, the electrode group holder 12 is interposed and secured between the lid 2 and the leads 13a and 13b. The cap body is thus completed. The cap body denotes a body obtained by assembling the component parts of the battery 100, other than the electrode group 11, the container 1, the electrode guards 16a and 16b, and the securing tapes (insulating tapes) 17a and 17b for the electrode guards. An example of the cap body is the assembled body shown in FIG. 7.

In the cap body, the weld portions 13a-3 of the positive electrode lead 13a and the positive electrode lead auxiliary member 15a-1 are bonded together by, for example, ultrasonic bonding, while the weld portion 13a-4 and the positive electrode lead auxiliary member 15a-2 are bonded together by, for example, ultrasonic bonding. Similarly, the weld portions 13b-3 of the negative electrode lead 13b and the negative electrode lead auxiliary member 15b-1 are bonded together by, for example, ultrasonic bonding, while the weld portion 13b-4 and the negative electrode lead auxiliary member 15b-2 are bonded together by, for example, ultrasonic bonding. This enables each of the leads of the positive electrode and the negative electrode to have electrical connection with a corresponding one of the current collecting tabs of the positive electrode and the negative electrode, and the cap body and the electrode group 11 are integrally assembled.

Thereafter, with the positive electrode guard 16a being inserted in the positive electrode current collecting tab 14a from one of the ends in the direction along the winding axis of the electrode group 11, the insulating tape 17a is applied to the boundary between the positive electrode guard 16a and the electrode group 11, thereby securing the positive electrode guard 16a to the electrode group 11. Similarly, with the negative electrode guard 16b being inserted in the negative electrode current collecting tab 14b from the other end in the direction along the winding axis of the electrode group 11, the insulating tape 17b is applied to the boundary between the negative electrode guard 16b and the electrode group 11, thereby securing the negative electrode guard 16b to the electrode group 11.

The lid 2 and the end face of the opening 21 of the container 1 are brought in contact with each other by inserting the cap body and the electrode group 11 in the container 1 provided with the opening 21 in such a manner that the electrode group 11 leads.

In this condition, the outer peripheral edge portion of the lid 2 is irradiated with a laser from a face of the lid 2, on which the positive electrode terminal 5a and the negative electrode terminal 5b are arranged, that is, from an upper side of the lid 2. In this manner, the lid 2 and the end face of the opening 21 of the container 1 are welded to each other.

Thereafter, an electrolyte solution is injected through the liquid inlet 10 into the battery 100 to fully fill the positive electrode, the negative electrode, and the separator of the electrode group 11, and also gaps between these layers, with the electrolyte solution. The sealing plate 8 is then welded to the liquid inlet 10 to seal the liquid inlet 10. In this manner, the battery 100 is completed.

Herein, if an electrolyte solution remains at the gap between the electrode group holder 12 and the lid 2 when the electrolyte solution is injected, the electrolyte solution may spout out of the container 1 through the liquid inlet 10 before welding of the sealing plate 8. The electrolyte solution that has spouted out may be adhered to the vicinity of the liquid inlet 10, that is, the portion to be sealed with the sealing plate 8, on the outer surface of the lid 2. In this case, the adhered electrolyte may cause a welding defect in the sealing plate 8.

In the present embodiment, the opening 12a is provided across a position facing the gas discharge valve 9 and a position facing the liquid inlet 10, such as in the electrode group holder 12 of the battery 100. When an electrolyte solution is injected, the opening 12 provided in this manner prevents an electrolyte solution from remaining at the gap between the electrode group holder 12 and the lid 2. This decreases the possibility of an electrolyte causing welding defects when the sealing plate 8 is welded to the liquid inlet 10.

In particular, it is preferable that the gas discharge valve 9 according to the present embodiment be provided in the center part of the lid 2, and the liquid inlet 10 also be provided in the center part of the lid 2 so that an electrolyte solution to be injected is uniformly impregnated into the electrode group 11. Therefore, the gas discharge valve 9 and the liquid inlet 10 are provided in positions close to each other.

If the electrode group holder 12 is configured in a manner such that an opening (open hole) corresponding to the gas discharge valve 9 and an opening (open hole) corresponding to the liquid inlet 10 are formed independently of each other, an electrolyte solution may remain between the electrode group holder 12 and the lid 2. On the other hand, the electrode group holder 12 according to the present embodiment is configured in a manner such that the opening (open hole) 12a provided in the electrode group holder 12 arranged directly below the lid 2 is provided across a position facing the gas discharge valve 9 and a position facing the liquid inlet 10. With this configuration, it is easier to clear an electrolyte solution remaining between the electrode group holder 12 and the lid 2 at the time of injection, and to resolve defects in welding of the sealing plate 8 to the lid 2.

In addition, the electrode group 11 is inserted into the container 1 with the direction along winding axis B being orthogonal to the insertion direction. This brings an R portion of the outermost periphery of the electrode group 11 closest to the center part of the electrode group holder 12. If the electrode group 11 is brought into contact with the electrode group holder 12 and even with the lid 2 through the opening 12a of the electrode group holder 12, an electrolyte solution adhered to and impregnated into the electrode group 11 may be adhered to the vicinity of the liquid inlet 10 of the lid 2.

However, the formation of the convex portions (protrusions) 12e, 12f, etc. in positions close to the opening 12a as in the present embodiment enables the electrode group holder 12 to maintain a certain interval between, in particular, the liquid inlet 10 and the electrode group 11. This decreases the possibility of an electrolyte solution adhered to and impregnated into the electrode group 11 being adhered to the vicinity of the liquid inlet 10. Thus, defects in welding of the sealing plate 8 to the lid 2 can be resolved more easily.

In the electrode group holder 12, each of the convex portions 12e and 12f is supported by a corresponding one of the ribs 45a and 45b from the side in which the lid 2 is positioned. This ensures that a pressing force against a side opposite to the side in which the lid 2 is positioned is exerted from the convex portions 12e and 12f to the electrode group 11. This further ensures a certain interval between the liquid inlet 10 and the electrode group 11.

With the battery according to at least one of the embodiments and examples, the electrode group holder is provided between the lid and the electrode group inside the container, and the electrode group holder is stacked together with the lid. In the electrode group holder, the open hole that penetrates through the electrode group holder is formed across an area facing the gas discharge valve and an area facing the liquid inlet. Accordingly, it is possible to provide the battery for reducing welding defects due to an electrolyte solution.

While certain embodiments have been described, these embodiments have been presented by way of example only, and are not intended to limit the scope of the inventions.

The invention is defined by the appended claims.

## Claims

1. A battery (100) comprising:
an electrode group (11) including a positive electrode and a negative electrode;
a container (1) in which the electrode group (11) is housed and an opening (21) is formed, the opening (21) being open on one side in a height direction;
a lid (2) configured to cover the opening (21) of the container (1), and including a gas discharge valve (9), a liquid inlet (10) penetrating through the lid (2) being formed;
a pair of electrode terminals (5a, 5b) attached to an outer surface of the lid (2), and electrically connected to the electrode group (11); and
an electrode group holder (12) provided between the lid (2) and the electrode group (11) inside the container (1), and stacked together with the lid (2), an open hole (12a) penetrating through the electrode group holder (12) being formed across an area facing the gas discharge valve (9) and an area facing the liquid inlet (10);
**characterized in that**
the pair of electrode terminals (5a, 5b) are separated from each other in a lateral direction intersecting the height direction;
wherein the open hole (12a) is disposed between the pair of electrode terminals (5a, 5b) in the lateral direction;
wherein the electrode group holder (12) includes a protrusion protruding to a side in which the electrode group (11) is positioned, the protrusion being disposed between the pair of electrode terminals (5a, 5b) in the lateral direction and being formed adjacent to the open hole (12a) in the lateral direction.

2. The battery (100) according to claim 1, wherein the protrusion is provided on each of both sides of the open hole (12a) in the lateral direction.

3. The battery (100) according to claim 1 or 2, wherein the electrode group holder (12) includes a lattice-shaped rib (45a) configured to support the protrusion from a side in which the lid (2) is positioned.

4. The battery (100) according to any one of claims 1 to 3, wherein:
the electrode group holder (12) is arranged in a condition in which a long-side direction of the electrode group holder (12) corresponds to the lateral direction; and
the lid (2) is arranged in a condition in which a long-side direction of the lid (2) corresponds to the lateral direction.

5. The battery (100) according to any one of claims 1 to 4, wherein:
the positive electrode of the electrode group (11) includes a positive electrode current collector, and a positive electrode active material-containing layer carried on a surface of the positive electrode current collector;
the negative electrode of the electrode group (11) includes a negative electrode current collector, and a negative electrode active material-containing layer carried on a surface of the negative electrode current collector;
the positive electrode current collector includes a positive electrode current collecting tab in which the positive electrode active material-containing layer is not carried on the surface;
the negative electrode current collector includes a negative electrode current collecting tab in which the negative electrode active material-containing layer is not carried on the surface;
the positive electrode current collecting tab protrudes from the negative electrode toward one side in the lateral direction; and
the negative electrode current collecting tab protrudes from the positive electrode toward a side opposite to the side toward which the positive electrode current collecting tab protrudes in the lateral direction.

6. A battery pack comprising the battery (100) according to any one of claims 1 to 5.

## Patentansprüche

1. Batterie (100), umfassend:
eine Elektrodengruppe (11) mit einer positiven und einer negativen Elektrode;
einen Behälter (1), in dem die Elektrodengruppe (11) untergebracht ist und eine Öffnung (21) ausgebildet ist, wobei die Öffnung (21) auf einer Seite in einer Höhenrichtung offen ist;
einen Deckel (2), der konfiguriert ist, die Öffnung (21) des Behälters (1) abzudecken, und der ein Gasauslassventil (9) enthält, wobei ein Flüssigkeitseinlass (10) ausgebildet ist, der durch den Deckel (2) hindurchgeht;
ein Paar von Elektrodenanschlüssen (5a, 5b), die an einer Außenfläche des Deckels (2) angebracht und elektrisch mit der Elektrodengruppe (11) verbunden sind; und
einen Elektrodengruppenhalter (12), der zwischen dem Deckel (2) und der Elektrodengruppe (11) innerhalb des Behälters (1) vorgesehen ist und mit dem Deckel (2) gestapelt ist, wobei ein offenes Loch (12a), das durch den Elektrodengruppenhalter (12) hindurchgeht, über einem Bereich, der dem Gasauslassventil (9) zugewandt ist, und einem Bereich, der dem Flüssigkeitseinlass (10) zugewandt ist, ausgebildet ist;
**dadurch gekennzeichnet, dass**
das Paar von Elektrodenanschlüssen (5a, 5b) in einer die Höhenrichtung schneidenden seitlichen Richtung voneinander getrennt sind;
wobei das offene Loch (12a) zwischen dem Paar von Elektrodenanschlüssen (5a, 5b) in der seitlichen Richtung angeordnet ist;
wobei der Elektrodengruppenhalter (12) einen Vorsprung aufweist, der zu einer Seite vorsteht, in der die Elektrodengruppe (11) positioniert ist, wobei der Vorsprung zwischen dem Paar von Elektrodenanschlüssen (5a, 5b) in der seitlichen Richtung angeordnet ist und benachbart zu dem offenen Loch (12a) in der seitlichen Richtung ausgebildet ist.

2. Batterie (100) gemäß Anspruch 1, wobei der Vorsprung auf jeder der beiden Seiten des offenen Lochs (12a) in der seitlichen Richtung vorgesehen ist.

3. Batterie (100) gemäß Anspruch 1 oder 2, wobei der Elektrodengruppenhalter (12) eine gitterförmige Rippe (45a) aufweist, die so konfiguriert ist, dass sie den Vorsprung von einer Seite, an der der Deckel (2) positioniert ist, stützt.

4. Batterie (100) gemäß einem der Ansprüche 1 bis 3, wobei:
der Elektrodengruppenhalter (12) in einem Zustand angeordnet ist, in dem eine Längsseitenrichtung des Elektrodengruppenhalters (12) der seitlichen Richtung entspricht; und
der Deckel (2) in einem Zustand angeordnet ist, in dem eine längsseitige Richtung des Deckels (2) mit der seitlichen Richtung übereinstimmt.

5. Batterie (100) nach einem der Ansprüche 1 bis 4, wobei:
die positive Elektrode der Elektrodengruppe (11) einen Positiv-Elektroden-Stromkollektor und eine ein aktives Material enthaltende Positiv-Elektroden-Schicht, die auf einer Oberfläche des Positiv-Elektroden-Stromkollektors getragen wird, enthält;
die negative Elektrode der Elektrodengruppe (11) einen Negativ-Elektroden-Stromkollektor und eine ein aktives Material enthaltende Negativ-Elektroden-Schicht umfasst, die auf einer Oberfläche des Negativ-Elektroden-Stromkollektors getragen wird;
der Positiv-Elektroden-Stromkollektor eine Positiv-Elektroden-Stromkollektorlasche aufweist, bei der die das aktive Material enthaltende Positiv-Elektroden-Schicht nicht auf der Oberfläche getragen wird;
der Stromabnehmer für die negative Elektrode eine Negativ-Elektroden-Stromkollektorlasche aufweist, in der die das aktive Material enthaltende Negativ-Elektroden-Schicht nicht auf der Oberfläche getragen wird;
die Positiv-Elektroden-Stromkollektorlasche von der negativen Elektrode in der seitlichen Richtung zu einer Seite hin vorsteht; und
die Negativ-Elektroden-Stromkollektorlasche von der positiven Elektrode zu einer Seite hin vorsteht, die der Seite gegenüberliegt, zu der die Positiv-Elektroden-Stromkollektorlasche in der seitlichen Richtung vorsteht.

6. Batteriepack, umfassend eine Batterie (100) gemäß einem der Ansprüche 1 bis 5.

## Revendications

1. Batterie (100) comprenant :
un groupe d'électrodes (11) incluant une électrode positive et une électrode négative ;
un contenant (1) dans lequel le groupe d'électrodes (11) est logé et une ouverture (21) est formée, l'ouverture (21) étant ouverte sur un côté dans une direction de hauteur ;
un couvercle (2) configuré pour recouvrir l'ouverture (21) du contenant (1), et incluant une soupape (9) de décharge de gaz, une entrée (10) de liquide pénétrant à travers le couvercle (2) étant formée ;
une paire de bornes d'électrodes (5a, 5b) fixées à une surface extérieure du couvercle (2), et électriquement connectées au groupe d'électrodes (11) ; et
un support (12) de groupe d'électrodes prévu entre le couvercle (2) et le groupe d'électrodes (11) à l'intérieur du contenant (1), et empilé avec le couvercle (2), un trou ouvert (12a) pénétrant à travers le support (12) de groupe d'électrodes étant formé à travers une zone faisant face à la soupape (9) de décharge de gaz et une zone faisant face à l'entrée (10) de liquide ;
**caractérisée en ce que**
la paire de bornes d'électrodes (5a, 5b) sont séparées l'une de l'autre dans une direction latérale coupant la direction de hauteur ;
dans laquelle le trou ouvert (12a) est disposé entre la paire de bornes d'électrodes (5a, 5b) dans la direction latérale ;
dans laquelle le support (12) de groupe d'électrodes inclut une saillie faisant saillie vers un côté dans lequel est positionné le groupe d'électrodes (11), la saillie étant disposée entre la paire de bornes d'électrodes (5a, 5b) dans la direction latérale et étant formée de manière adjacente au trou ouvert (12a) dans la direction latérale.

2. Batterie (100) selon la revendication 1, dans laquelle la saillie est prévue sur chacun des deux côtés du trou ouvert (12a) dans la direction latérale.

3. Batterie (100) selon la revendication 1 ou la revendication 2, dans laquelle le support (12) de groupe d'électrodes inclut une nervure en forme de réseau (45a) configurée pour supporter la saillie depuis un côté dans lequel le couvercle (2) est positionné.

4. Batterie (100) selon l'une quelconque des revendications 1 à 3, dans laquelle :
le support (12) de groupe d'électrodes est agencé dans un état dans lequel une direction de côté long du support (12) de groupe d'électrodes correspond à la direction latérale ; et
le couvercle (2) est agencé dans un état dans lequel une direction de côté long du couvercle (2) correspond à la direction latérale.

5. Batterie (100) selon l'une quelconque des revendications 1 à 4, dans laquelle :
l'électrode positive du groupe d'électrodes (11) inclut un collecteur de courant d'électrode positive, et une couche contenant un matériau actif d'électrode positive portée sur une surface du collecteur de courant d'électrode positive ;
l'électrode négative du groupe d'électrodes (11) inclut un collecteur de courant d'électrode négative, et une couche contenant un matériau actif d'électrode négative portée sur une surface du collecteur de courant d'électrode négative ;
le collecteur de courant d'électrode positive inclut une languette de collecte de courant d'électrode positive dans laquelle la couche contenant un matériau actif d'électrode positive n'est pas portée sur la surface ;
le collecteur de courant d'électrode négative inclut une languette de collecte de courant d'électrode négative dans laquelle la couche contenant un matériau actif d'électrode négative n'est pas portée sur la surface ;
la languette de collecte de courant d'électrode positive fait saillie depuis l'électrode négative vers un côté dans la direction latérale ; et
la languette de collecte de courant d'électrode négative fait saillie depuis l'électrode positive vers un côté opposé au côté vers lequel la languette de collecte de courant d'électrode positive fait saillie dans la direction latérale.

6. Bloc-batterie comprenant la batterie (100) selon l'une quelconque des revendications 1 à 5.
